# EUROPÄISCHE PATENTSCHRIFT

(11) **EP 2 887 028 B1**
(45) Veröffentlichungstag und Bekanntmachung des Hinweises auf die Patenterteilung: **07.10.2020**
(21) Anmeldenummer: 14192656.8
(22) Anmeldetag: 11.11.2014
(51) Int. Cl.: G01F 1/696, G01K 7/20, G01K 7/24

(54) **Schaltungsanordnung zur Temperaturüberwachung**
Circuitry for temperature monitoring
Agencement de couplage destinée à la surveillance de la température

(30) Priorität: 19.12.2013 DE 102013021305
(43) Veröffentlichungstag der Anmeldung: 24.06.2015
(73) Patentinhaber: Krohne Messtechnik GmbH, 47058 Duisburg (DE)
(72) Erfinder: Lehmkuhl, Jürgen, 46535 Dinslaken (DE); Kube, Jörg, 45772 Marl (DE)
(74) Vertreter: Gesthuysen Patent- und Rechtsanwälte

(56) Entgegenhaltungen:
- EP-A2- 0 212 076
- EP-A2- 0 347 218
- US-B1- 6 763 711

## Beschreibung

Die Erfindung betrifft eine Schaltungsanordnung zur Temperaturüberwachung mindestens einer elektronischen Komponente gemäß dem Oberbegriff von Patentanspruch 1.

In der modernen Prozessautomatisierung werden Messgeräte oder Aktoren auch in explosionsgefährdeten Bereichen eingesetzt. Dies macht es insbesondere erforderlich, dass bestimmte Spannungs-, Strom- oder Temperaturwerte nicht durch die verwendeten Komponenten überschritten werden.

Daher sind beispielsweise die Stromkreise von Sensoren für die Anwendung in explosionsgeschützten Bereichen in der Zündschutzart "Eigensicherheit" ausgeführt. Eigensicherheit bedeutet dabei, dass sichergestellt ist, dass auch im Fehlerfall kein unsicherer Zustand auftritt und insbesondere keine Explosionsgefahr besteht. Bestimmte Anforderungen an die Ausgestaltung sind dabei teilweise durch Normen vorgegeben.

So sind in eigensicheren Stromkreisen die auftretenden Spannungen und Ströme auf sichere Höchstwerte begrenzt, um eine Explosionsgefahr durch Funkenzündung auszuschließen. Von diesen Werten ausgehend, kann in einem eigensicheren Stromkreis ein Höchstwert für die Verlustleistung angenommen werden.

Zusätzlich gilt es, die Oberflächentemperatur der in dem explosionsgefährdeten Bereich angeordneten elektronischen Komponenten zu begrenzen, um der Explosionsgefahr durch heiße Oberflächen zu begegnen. Dies kann ebenfalls über die Beschränkung der Verlustleistung geschehen, wofür der thermische Widerstand (andere Bezeichnungen sind: Wärmewiderstand oder Wärmeleitwiderstand) der betroffenen Komponente heranzuziehen ist.

Für den Explosionsschutz sind sogenannte Temperaturklassen mit jeweils maximal zulässigen Temperaturwerten vorgegeben. So darf bei einer Klassifizierung in Temperaturklasse T4 beispielsweise die Oberflächentemperatur maximal 135 °C betragen.

Bei manchen Komponenten - wie beispielsweise den Heizelementen von kalorimetrischen Massedurchflussmessgeräten - führt aufgrund eines relativ hohen thermischen Widerstands die Temperaturbegrenzung dazu, dass die Verlustleistung auf relativ kleine Werte begrenzt ist.

Im Stand der Technik sind unterschiedliche Anordnungen zur kalorimetrischen oder thermischen Durchflussmessung bekannt. Diese Art der Bestimmung des Durchflusses von Fluiden - z. B. von Flüssigkeiten oder Gasen - in Rohrleitungen eignet sich insbesondere zur Messung bei kleineren Strömungsgeschwindigkeiten. Dabei ist das durch die Messung gewonnene Signal unmittelbar proportional zum Massedurchfluss. Als Stand der Technik sei beispielhaft die DE 10 2010 015 813 A1 genannt.

Eine wesentliche Messgröße ist der Wärmestrom, der von einem geheizten Element - als elektronischer Komponente - an das strömende Fluid abgegeben und von dem Fluid abtransportiert wird. Der abtransportierte Wärmestrom entspricht der elektrischen Heizleistung.

In der Praxis werden üblicherweise zwei Messmethoden unterschieden:
Bei der sogenannten Abkühlmethode kühlt das strömende Fluid das in den Strömungsquerschnitt des Messrohrs eingeführte Heizelement ab, wobei die Temperaturdifferenz zwischen der Temperatur des Fluids und der Temperatur des Heizelements konstant gehalten wird. Die erforderliche Heizleistung für die Erzeugung der konstanten Temperaturdifferenz dient der Bestimmung des Massedurchflusses.

Bei der sogenannten Aufwärmmethode wird ermittelt, um welches Maß der von dem Heizelement abgeführte Wärmestrom die Temperatur des Mediums an einem zweiten, stromabwärts angeordneten Sensor erhöht. Alternativ kann die Temperaturerhöhung durch Nachregeln der Heizleistung konstant gehalten werden, so dass dann die erforderliche Heizleistung als Messgröße für den Massestrom dient.

Das Messprinzip bedingt also eine sich aufheizende Komponente.

In dem Fall, dass kein Fluid vorhanden ist oder dass die Strömung zu gering ist, ist es insbesondere erforderlich, dass sichergestellt wird, dass sich das Heizelement, das auch als Heater bezeichnet wird, nicht über einen erlaubten Temperaturwert hinaus erwärmt.

Im Stand der Technik sind dafür Lösungen bekannt, bei denen eine hochohmige Barriere zwischen der Spannungsquelle und der elektronischen Komponente errichtet wird. Dies betrifft zum Beispiel die EP 0 212 076 A2, bei der eine elektrische Verbindung mit einem Transistor hochohmig geschaltet wird. Bei der EP 0 347 218 A2 wird ebenfalls mittels eines Transistors eine elektrische Verbindung hochohmig geschaltet und damit funktional eine Unterbrechung bewirkt.

Der Erfindung liegt daher die Aufgabe zugrunde, eine Schaltungsanordnung - insbesondere auch für die Verwendung bei einem kalorimetrischen Durchflussmessgerät - anzugeben, die eine sichere Überwachung der Temperatur einer mit einem elektrischen Strom beaufschlagten elektronischen Komponente gewährleistet.

Die erfindungsgemäße Schaltungsanordnung, bei der die zuvor hergeleitete und aufgezeigte Aufgabe gelöst ist, ist gelöst mit den Merkmalen des Kennzeichnungsteils von Patentanspruch 1.

Bei der erfindungsgemäßen Schaltungsanordnung dient die über den Widerstandswert der elektronischen Komponente gegebene Information über die Temperatur der sich erwärmenden Komponente selbst der sicheren Abschaltung der Stromversorgung und daher auch der Verhinderung einer weiteren Erwärmung.

Allgemein betrifft die Schaltungsanordnung insbesondere die eigensichere Versorgung von Sensorstromkreisen mit einem hohen Energiebedarf bei einem hohen thermischen Widerstand der verwendeten Bauteile bzw. Komponenten.

Wheatstone-Brücken oder Wheatstonesche Messbrücken bestehen im Stand der Technik zumeist aus vier Widerständen, die zu einem geschlossenen Ring bzw. einem Quadrat zusammengeschaltet sind. Dabei ist eine Spannungsquelle in der einen und ein Spannungsmessgerät in der anderen Diagonalen angeordnet. Mit dem Spannungsmessgerät wird im Stand der Technik die Brückenquerspannung gemessen.

Die Verwendung von Wheatstone-Brücken bei thermischen Massedurchflussmessgeräten ist beispielsweise bekannt aus den Druckschriften DE 2 403 908, DE 102 51 891 B4 oder DE 10 2009 029 171 A1. Dort dienen die Brücken jedoch der Messung des Widerstandswerts des Heizelements.

Im Stand der Technik dient eine Wheatstone-Brücke der Messung eines Widerstandswerts oder der Einstellung eines veränderlichen Widerstandselements.

In der Erfindung dient eine Wheatstone-Brücke dem Abschalten einer Stromversorgung, um eine weitere Erwärmung zu verhindern. Die Temperaturüberwachung gemäß der Erfindung ist daher auch eine Form der Temperaturbegrenzung.

Die Schaltvorrichtung besteht in einer Ausgestaltung zumindest teilweise aus steuerbaren Halbleiterbauelementen.

Die Schaltvorrichtung verfügt erfindungsgemäß über mindestens einen Schalter, der abhängig von der Brückenquerspannung und daher abhängig von dem thermischen Widerstandswert der elektronischen Komponente die elektrische Verbindung zwischen der elektronischen Komponente und der Spannungsquelle ermöglicht bzw. unterbricht.

Erfindungsgemäß ist in Bezug auf das Reagieren auf das Erreichen eines vorgegebenen Widerstands- bzw. Temperaturwerts vorgesehen, dass die Schaltvorrichtung ausgehend von der Brückenquerspannung auf eine elektrische Verbindung zwischen der Spannungsquelle und der elektronischen Komponente einwirkt. Die Spannungsversorgung der elektronischen Komponente wird hier abgeschaltet, indem ein Kurzschluss der Spannungsversorgung erzeugt wird.

So ist erfindungsgemäß auch vorgesehen, dass die elektronische Komponente einen temperaturabhängigen elektrischen Widerstandswert aufweist.

Erforderlich ist es grundlegend, dass der Zusammenhang zwischen Temperatur und thermischem Widerstandswert der elektronischen Komponente bekannt ist, so dass die anderen drei Widerstandselemente der Wheatstonebrücke entsprechend und auf den Grenztemperaturwert der elektronischen Komponente abgestimmt dimensioniert werden können.

Ist insbesondere ein Widerstandselement in Reihe zwischen der elektronischen Komponente und der Spannungsquelle geschaltet, so dient dieses zusätzlich in einer Ausgestaltung noch der Strombegrenzung, um eine Funkenzündung sicher zu verhindern.

Eine besondere Ausgestaltung besteht darin, dass die elektronische Komponente mindestens ein temperaturabhängiges elektrisches Widerstandselement aufweist.

Die Schaltvorrichtung weist erfindungsgemäß einen Komparator und einen Schalter auf. Dabei wirkt der Komparator auf den Schalter ein und der Schalter unterbricht in einem Schaltzustand eine Verbindung zwischen der Spannungsquelle und der elektronischen Komponente.

Über den Schalter kann daher der Komparator die Verbindung zwischen der Spannungsquelle und der elektronischen Komponente öffnen oder schließen, so dass insbesondere das Überschreiten eines vorgegebenen Temperaturwerts durch die elektronische Komponente verhindert werden kann, indem der Stromfluss unterbrochen wird.

Die Unterbrechung der Verbindung wird erfindungsgemäß dadurch realisiert, dass vor der elektronischen Komponente die Spannungsquelle kurzgeschlossen wird, so dass kein Strom über die nachgeordnete elektronische Komponente fließt.

In einer Ausgestaltung ist der Schalter zwischen der Spannungsquelle und einem Massepotential angeordnet, wodurch im Schaltungsfall die Spannungsquelle gegen Masse kurzgeschlossen wird und kein Strom über die elektronische Komponente fließt. Der Schalter ist daher vorzugweise ausgehend von der Spannungsquelle der elektronischen Komponente vorgelagert.

Konkret handelt es sich bei dem Schalter in einer Ausgestaltung insbesondere um einen Thyristor, der von dem Komparator gesteuert wird.

Ein Thyristor ist ein Halbleiterbauelement, bestehend aus vier oder mehr Halbleiterschichten wechselnder Dotierung. Thyristoren sind sogenannte einschaltbare Bauelemente, die im Ausgangszustand nichtleitend sind und durch einen kleinen Strom an der Gate-Elektrode eingeschaltet werden können. Danach bleibt der Thyristor auch ohne Gatestrom leitend und wird durch Unterschreiten eines Mindeststroms, des sogenannten Haltestroms, wieder ausgeschaltet.

In dieser Ausgestaltung wird ein Thyristor geschaltet, wenn der thermische Widerstandswert der elektronischen Komponente einen Grenzwert erreicht hat.

In einer Ausgestaltung dient die Schaltvorrichtung bzw. in einer Ausgestaltung speziell der Schalter bzw. der Thyristor auch der Begrenzung der maximal auftretenden elektrischen Spannung.

Bei einer eigensicheren Hilfsenergieversorgung mit hoher Leistung erfolgt in einer Ausgestaltung eine schnelle Abschaltung mit der Schaltungsanordnung, um die Funkendauer im Falle eines Kurzschlusses zuverlässig zu begrenzen.

Die Überwachung des Widerstandswerts der elektronischen Komponente erfolgt in einer Ausgestaltung dadurch, dass an zwei Eingängen des Komparators die Brückenquerspannung der Wheatstone-Brücke anliegt.

Damit die elektronische Komponente als nichtstöranfälliges Bauteil betrachtet werden kann, darf sie nur zu maximal 2/3 ausgelastet sein. Ebenso ist die Bauart vorgeschrieben. Ein drahtgewickelter Widerstand mit einem Schutz gegen das Abwickeln des Drahtes bei dessen Bruch kann beispielsweise als nichtstöranfällige Komponente dienen. Vorzugsweise ist auch das mit der elektronischen Komponente in Reihe geschaltete Widerstandselement als nichtstöranfälliger Widerstand ausgeführt.

Um die Zuverlässigkeit der Schaltungsanordnung zu erhöhen, ist in einer Ausgestaltung vorgesehen, dass die elektronische Komponente ein Teil mindestens einer Redundanz-Wheatstone-Brücke ist und dass mindestens eine Redundanz-Schaltvorrichtung vorgesehen ist, die ausgehend von einer Brückenquerspannung der Redundanz-Wheatstone-Brücke auf die Beaufschlagung der elektronischen Komponente mit dem elektronischen Strom einwirkt.

Die zuvor hergeleitete und aufgezeigte Aufgabe kann auch bei dem eingangs genannten kalorimetrischen Massedurchflussmessgerät verwendet werden, indem die elektronische Komponente ein Teil mindestens einer Schaltungsanordnung nach einer der obigen Ausführungen ist.

Die obigen Ausgestaltungen und Ausführungen bezüglich der Schaltungsanordnung gelten daher entsprechend auch für die Anwendung in einem kalorimetrischen Massedurchflussmessgerät. Dabei handelt es sich bei der elektronischen Komponente insbesondere um das Heizelement des Messgeräts.

Anhand des kalorimetrischen Massedurchflussmessgeräts lässt sich auch die erfindungsgemäße Schaltungsanordnung noch einmal erläutern.

Das Messgerät verfügt über ein Heizelement, das einen temperaturabhängigen elektrischen Widerstand aufweist. Aufgrund der Anwendung wird eine maximale Temperatur für das Heizelement als elektronischer Komponente der Schaltungsanordnung vorgegeben. Dieser Grenztemperatur ist ein Widerstandswert als Grenzwiderstand zugeordnet.

Die drei Widerstandselemente der Wheatstone-Brücke werden ausgehend von dem Grenzwiderstand so ausgelegt, dass der Komparator der Schaltvorrichtung bei Erreichen des Grenzwiderstands den Schalter so schaltet, dass die Verbindung zwischen dem Heizelement und der Spannungsquelle unterbrochen wird.

Durch das Unterbrechen der Stromversorgung kann es zu keiner weiteren Erwärmung kommen und die Grenztemperatur kann nicht überschritten werden.

Dadurch wird sichergestellt, dass die elektronische Komponente nicht zu heiß wird und es nicht durch die elektronische Komponente zu einer Explosion kommen kann.

Für eine Strombegrenzung sorgt in einer Ausgestaltung zusätzlich ein der elektronischen Komponente vorgeschaltetes Widerstandselement, das vorzugsweise auch ein Teil der Wheatstone-Brücke ist.

Der Schalter der Schaltvorrichtung dient in einer zusätzlichen oder alternativen Ausgestaltung auch der Spannungsbegrenzung.

Im Einzelnen gibt es nun eine Vielzahl von Möglichkeiten, die erfindungsgemäße Schaltungsanordnung und das erfindungsgemäße kalorimetrische Massedurchflussmessgerät auszugestalten und weiterzubilden. Dazu wird verwiesen einerseits auf die dem Patentanspruch 1 und entsprechend auf für den Patentanspruch 10 geltenden nachgeordneten Patentansprüche, andererseits auf die folgende Beschreibung von Ausführungsbeispielen in Verbindung mit der Zeichnung. In der Zeichnung zeigen
- Fig. 1: eine schematische Darstellung der Schaltungsanordnung als Blockschaltbild und
- Fig. 2: ein schematisches Durchflussmessgerät im Schnitt.

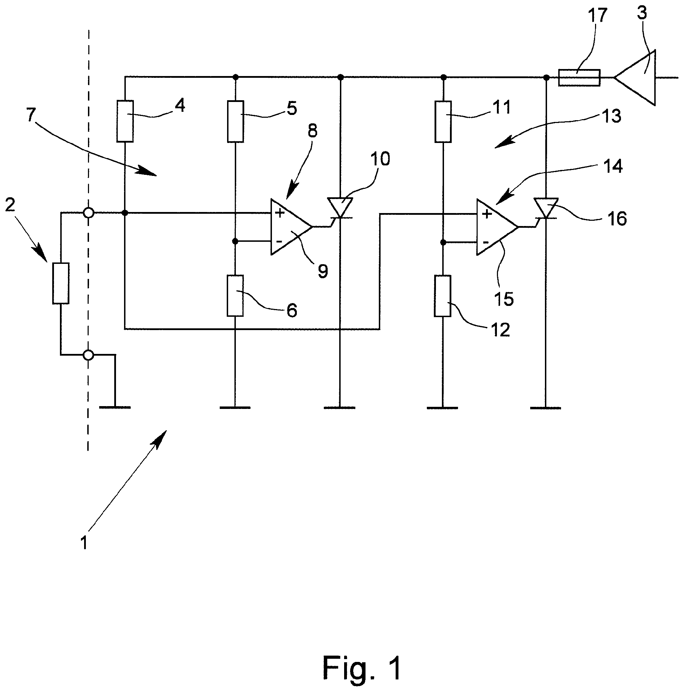

In der Fig. 1 ist schematisch eine Schaltungsanordnung 1 dargestellt, bei der die Temperatur einer elektronischen Komponente 2 überwacht und bei der sichergestellt wird, dass ein bestimmter vorzugebender Temperaturwert nicht überschritten wird.

Bei der Anwendung in explosionsgefährdeten Bereichen ist es teilweise erforderlich sicherzustellen, dass keine Temperaturen an einem Bauteil auftreten, die dazu führen, dass sich ein Medium in dem entsprechenden Bereich entzündet.

Eine solche Temperaturerhöhung könnte bei der gezeigten Anordnung dadurch entstehen, dass sich die elektronische Komponente 2, die hier im Folgenden rein als elektrisches Widerstandselement betrachtet wird, in Folge der Beaufschlagung mit einem elektrischen Strom von der Spannungsquelle 3 erhitzt.

Die elektronische Komponente 2 ist also zumindest temporär mit der Spannungsquelle 3 elektrisch verbunden und wird auch zumindest temporär von der Spannungsquelle 3 mit einem elektrischen Strom beaufschlagt. Die Schaltungsanordnung 1 dient dabei dem Zweck, dass in dem Fall einer zu hohen Temperatur der elektronischen Komponente 2 diese Stromversorgung unterbrochen wird, um ein weiteres Erwärmen zu verhindern.

Gezeigt ist hier nur ein Widerstandselement als elektronische Komponente 2. In alternativen - hier nicht dargestellten - Ausgestaltungen können auch mehrere Bauteile oder Einheiten oder Komponenten als elektronische Komponente 2 vorgesehen und passend miteinander kontaktiert sein.

Die Trennung zwischen der explosionsgefährdeten und der sicheren Zone ist hier durch die gestrichelte Linie und die beiden Kontaktstellen für die elektronische Komponente 2 angedeutet.

Die Überwachung der Temperatur bzw. auch das Sicherstellen, dass keine zu hohe Temperatur vorliegt, wird hier dadurch realisiert, dass die elektronische Komponente 2 mit drei elektrischen Widerstandselementen 4, 5 und 6 eine Wheatstonebrücke 7 bildet.

Hierfür sind die elektronische Komponente 2 und ein Widerstandselement 4 in Reihe zwischen der Spannungsquelle 3 und Masse geschaltet. Parallel dazu sind die zwei anderen in Reihe zueinander geschalteten Widerstandselemente 5, 6 vorgesehen, die hier ebenfalls mit der Spannungsquelle 3 und dem Massepotential verbunden sind.

Die Widerstandselemente 4, 5 und 6 sind hier beispielhaft als diskrete Widerstandsbauteile angedeutet.

Das in Reihe mit der elektronischen Komponente 2 geschaltete Widerstandselement 4 dient hier auch der Begrenzung des elektrischen Stroms, der durch die elektronische Komponente 1 fließt. Daher ist der Widerstandswert dieses Widerstandselements 4 auch entsprechend den Schutzbedingungen zu wählen. In einer alternativen - nicht gezeigten - Ausgestaltung setzt sich mindestens ein Widerstandselement 4, 5 oder 6 aus mehreren Bauteilen oder Komponenten zusammen, die sich jedoch in Bezug auf die erfindungsgemäße Schaltungsanordnung 1 insgesamt durch die Eigenschaft des elektrischen Widerstands beschreiben lassen.

Für die Überwachung der Brückenquerspannung der Wheatstonebrücke 7 ist eine Schaltvorrichtung 8 vorgesehen, die hier aus einem Komparator 9 und einem Schalter 10 besteht. Der Schalter 10 liegt dabei parallel zu der Wheatstonebrücke 7 und ist - von der Spannungsquelle 3 aus gesehen - der Wheatstonebrücke 7 vorgelagert.

Der Schalter 10 besteht in der gezeigten Ausgestaltung aus einem Thyristor, der vom Ausgang des Komparators 9 gesteuert wird und die elektrische Verbindung zwischen der Spannungsquelle 3 und - hier beispielhaft - Masse öffnet bzw. schließt.

Abhängig vom Schaltzustand des Schalters 10 wird daher die elektronische Komponente 2 entweder mit elektrischem Strom beaufschlagt oder es wird die elektrische Verbindung zwischen der elektronischen Komponente 2 und der Spannungsquelle 3 unterbrochen.

Die Verbindungen zwischen der Wheatstonebrücke 7 und dem Komparator 9, der hier durch einen Operationsverstärker ausgeführt ist, sind dabei derartig, dass die Brückenquerspannung an den Eingängen des Komparators 9 anliegt. Um die Zuverlässigkeit der Schaltungsanordnung 1 zu erhöhen, bilden die elektronische Komponente 2 und das mit ihr in Reihe geschaltete Widerstandselement 4 und zwei parallel dazu und zueinander in Reihe geschaltete Widerstandselemente 11, 12 eine Redundanz-Wheatstonebrücke 13, deren Brückenquerspannung durch eine Redundanz-Schaltvorrichtung 14 überwacht wird.

Die Redundanz-Schaltvorrichtung 14 ist dabei in der gezeigten Ausgestaltung gleich der Schaltvorrichtung 8 ausgestaltet und verfügt daher über einen Komparator 15 und einen Thyristor als Schalter 16, der zwischen der Spannungsquelle 3 und Masse angeordnet ist.

Die Redundanz-Wheatstonebrücke 13 und die Redundanz-Schaltvorrichtung 14 arbeiten prinzipiell wie die Wheatstonebrücke 7 und die Schaltvorrichtung 8. Auch hier trägt daher ein gewisser Grenz-Widerstandswert der elektronischen Komponente 2 dazu bei, dass die Stromversorgung unterbrochen wird.

Der Spannungsquelle 3 ist in der gezeigten Ausgestaltung in Richtung der elektronischen Komponente 2 noch eine Sicherung 17 vorgeschaltet.

Die erfindungsgemäße Schaltungsanordnung 1 der gezeigten Ausgestaltung funktioniert insgesamt wie folgt:
Die elektronische Komponente 2, die sich beispielsweise in eine explosionsgefährdeten Zone befindet, wird von einer Spannungsquelle 3, die hier insbesondere in der nicht-explosionsgefährdeten Zone angeordnet ist, mit einem elektrischen Strom beaufschlagt.

Hierfür ist die elektronische Komponente 2 in der gezeigten Ausgestaltung zwischen der Spannungsquelle 3 und Masse angeordnet.

Durch ein in Reihe mit der elektronischen Komponente 2 angeordnetes elektrisches Widerstandselement 4 und zwei miteinander in Reihe und parallel zur elektronischen Komponente 2 angeordnete Widerstandselemente 5, 6 wird eine Wheatstonebrücke 7 gebildet.

Der Widerstandswert der elektronischen Komponente 2 ist dabei abhängig von der Temperatur der Komponente 2.

Die Brückenquerspannung der Wheatstonebrücke 7 wird von einer Schaltvorrichtung 8 überwacht.

Die Widerstandselemente 4, 5 und 6 sind dabei so eingestellt oder ausgesucht, dass die Schaltvorrichtung 8 beim Erreichen eines vorgegebenen Widerstandswerts der elektronischen Komponente 2 die Stromversorgung unterbricht, indem sie den Kontakt zwischen der Spannungsquelle 3 und der elektronischen Komponente 2 durch einen Schalter 10 trennt.

Erreicht daher die elektronische Komponente 2 eine vorbestimmte Temperatur, so hat sie einen vorbekannten elektrischen Widerstandswert.

Die Wheatstonebrücke 7 erlaubt es, das Erreichen dieses Widerstandswerts bzw. dieser Temperatur zu erkennen und passend darauf zu reagieren.

Liegt dieser Zustand vor, so wird die Stromversorgung der elektronischen Komponente 2 unterbrochen und die elektronische Komponente 2 kann sich nicht weiter erwärmen.

Hat sich in der gezeigten Ausgestaltung die elektronische Komponente 2 wieder ausreichend abgekühlt, so ist die Wheatstonebrücke 7 wieder ausreichend verstimmt und die Stromversorgung der elektronischen Komponente 2 wird wieder hergestellt.

Alternativ kann - hier nicht dargestellt - durch entsprechenden Ausgestaltungen oder Bauteile auch das Rückkehren in den strombeaufschlagten Zustand verhindert werden.

In der gezeigten Ausgestaltung sind eine Hälfte der Wheatstonebrücke 7 und die Schaltvorrichtung 8 redundant ausgestaltet und ausgehend von der Spannungsquelle 3 vor der Wheatstonebrücke 7 angeordnet.

Damit bildet die elektronische Komponente 2 auch ein Teil der Redundanz-Wheatstone-Brücke 13, deren Brückenquerspannung sich auf den Schalter 16 der Redundanz-Schaltvorrichtung 14 auswirkt.

Das Schließen der elektrischen Verbindungen zu einem Stromkreis wird in der gezeigten Ausgestaltung teilweise über das Kontaktieren eines Massepotentials realisiert.

Die Schaltungsanordnung 1 ist dabei generell für die Temperaturüberwachung von mit einem Strom beaufschlagten elektronischen Komponenten 2, die sich durch ihren elektrischen Widerstand charakterisieren lassen, geeignet. Dies kann besonders bei der Anwendung in explosionsgefährdeten Zonen relevant sein, in denen das Überschreiten von bestimmen Temperaturwerten verhindert werden muss.

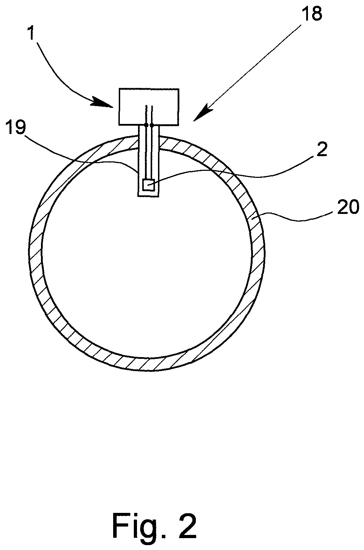

Eine besondere Anwendung der Schaltungsanordnung 1 zeigt beispielhaft die Fig. 2.

In der Fig. 2 ist ein Schnitt durch ein schematisch dargestelltes kalorimetrisches Massedurchflussmessgerät 18 zu sehen.

Hierfür ist die elektronische Komponente 2, wie sie in der Fig. 1 dargestellt ist, in einem Schutzrohr 19 im Innenraum eines von einem - nicht dargestellten - Medium durchflossenen Messrohrs 20 angeordnet.

Für die Messung wird die elektronische Komponente 2, bei der es sich hier insbesondere um mindestens ein Widerstandselement handelt, mit einem elektrischen Strom beaufschlagt, wodurch sich die Komponente 2 erwärmt.

Diese thermische Energie wird durch das strömende - hier nicht dargestellte - Medium abgeführt, wodurch sich das Medium lokal erwärmt.

Diese Temperaturänderung lässt sich durch einen in Strömungsrichtung der elektronischen Komponente 2 nachgeordneten - und hier nicht dargestellten - Temperatursensor erfassen.

Aus der Leistung der thermischen Komponente 2, der ermittelten Temperaturänderung und vorzugsweise auch Daten über das Messmedium lässt sich schließlich der Massedurchfluss des Mediums ermitteln.

Eine Problematik ergibt sich dabei, wenn kein Medium strömt oder wenn die Strömung des Mediums so klein ist, so dass sich die elektronische Komponente 2 bedingt durch die mangelnde Wärmeabfuhr zu sehr erhitzt.

Für diesen Fall ist hier die Schaltungsanordnung 1 vorgesehen, die beim Überschreiten eines vorgebbaren Temperaturwerts die Stromversorgung der elektronischen Komponente 2 unterbricht und eine weitere Erwärmung verhindert.

## Patentansprüche

1. Schaltungsanordnung (1) zur Temperaturüberwachung mindestens einer elektronischen Komponente (2), die insbesondere mit einem elektrischen Strom beaufschlagbar und mit mindestens einer Spannungsquelle (3) verbindbar ist, wobei die elektronische Komponente (2) einen temperaturabhängigen elektrischen Widerstandswert aufweist und ein Teil mindestens einer von der Schaltungsanordnung (1) umfassten Wheatstone-Brücke (7) ist und dass mindestens eine Schaltvorrichtung (8) vorgesehen ist, die ausgehend von einer Brückenquerspannung der Wheatstone-Brücke (7) auf die Beaufschlagung der elektronischen Komponente (2) mit dem elektrischen Strom einwirkt, wobei die Schaltvorrichtung (8) ausgehend von der Brückenquerspannung auf eine elektrische Verbindung zwischen der Spannungsquelle (3) und der elektronischen Komponente (2) einwirkt, wobei die Schaltvorrichtung (8) mindestens einen Komparator (9) und einen Schalter (10) aufweist, wobei an zwei Eingängen des Komparators (9) die Brückenquerspannung der Wheatstone-Brücke (7) anliegt und wobei der Komparator (9) auf den Schalter (10) einwirkt, **dadurch gekennzeichnet,**
der Schalter (10) so angeordnet und ausgestaltet ist, dass er in einem Schaltzustand vor der elektronischen Komponente (2) die Spannungsquelle (3) kurzschließt, so dass kein Strom über die nachgeordnete elektronische Komponente (2) fließt und so eine Verbindung zwischen der Spannungsquelle (3) und der elektronischen Komponente (2) unterbrochen wird.

2. Schaltungsanordnung (1) nach Anspruch 1, **dadurch gekennzeichnet, dass** die elektronische Komponente (2) mindestens ein temperaturabhängiges elektrischen Widerstandselement aufweist.

3. Schaltungsanordnung (1) nach Anspruch 1 oder 2, **dadurch gekennzeichnet, dass** es sich bei dem Schalter (10) um einen Thyristor handelt.

4. Schaltungsanordnung (1) nach einem der Ansprüche 1 bis 3, **dadurch gekennzeichnet, dass** die elektronische Komponente (2) ein Teil mindestens einer Redundanz-Wheatstone-Brücke (13) ist und dass mindestens eine Redundanz-Schaltvorrichtung (14) vorgesehen ist, die ausgehend von einer Brückenquerspannung der Redundanz-Wheatstone-Brücke (13) auf die Beaufschlagung der elektronischen Komponente (2) mit dem elektronischen Strom einwirkt.

## Claims

1. Circuit arrangement (1) for monitoring the temperature of at least one electronic component (2), which can be impinged with an electric current in particular and which can be connected to at least one voltage source (3), wherein the electronic component (2) has a temperature-dependent electrical resistance value and is part of at least one Wheatstone bridge (7) surrounded by the circuit arrangement (1), and that at least one switching device (8) is provided, which influences the impingement of the electronic component (2) with the electric current on the basis of a bridge transverse voltage of the Wheatstone bridge (7), wherein the switching device (8) influences an electrical connection between the voltage source (3) and the electronic component (2) on the basis of the bridge transverse voltage, wherein the switching device (8) has at least one comparator (9) and one switch (10), wherein the bridge transverse voltage of the Wheatstone bridge (7) is applied to two inputs of the comparator (9), and wherein the comparator (9) influences the switch (10),
**characterized in**
**that** the switch (10) is arranged and designed in such a manner that, in a switching state upstream of the electronic component (2), it short-circuits the voltage source (3) so that no current flows via the downstream electronic component (2), thereby interrupting a connection between the voltage source (3) and the electronic component (2).

2. Circuit arrangement (1) according to claim 1, **characterized in that** the electronic component (2) has at least one temperature-dependent electrical resistance element.

3. Circuit arrangement (1) according to any one of claims 1 or 2, **characterized in that** the switch (10) is a thyristor.

4. Circuit arrangement (1) according to any one of claims 1 to 3, **characterized in that** the electronic component (2) is a part of at least one redundancy Wheatstone bridge (13) and **in that** at least one redundancy switching device (14) is provided which, on the basis of a bridge transverse voltage of the redundancy Wheatstone bridge (13), influences the impinging of the electronic current to the electronic component (2).

## Revendications

1. Agencement de circuit (1) pour la surveillance de la température d'au moins un composant électronique (2), auquel peut notamment être appliqué un courant électrique et qui peut être relié à au moins une source de tension (3), dans lequel le composant électronique (2) présente une valeur de résistance électrique dépendant de la température et fait partie d'au moins un pont de Wheatstone (7) inclus dans l'agencement de circuit (1), et en ce qu'il est prévu au moins un dispositif de commutation (8) qui, à partir d'une tension transversale du pont de Wheatstone (7), agit sur l'application du courant électrique au composant électronique (2), dans lequel le dispositif de commutation (8) agit sur une connexion électrique entre la source de tension (3) et le composant électronique (2) à partir de la tension transversale du pont, dans lequel le dispositif de commutation (8) comporte au moins un comparateur (9) et un commutateur (10), dans lequel la tension transversale de pont du pont de Wheatstone (7) est appliquée à deux entrées du comparateur (9), et dans lequel le comparateur (9) agit sur le commutateur (10),
**caractérisé en ce que**
le commutateur (10) est agencé et conçu de telle manière que, dans un état de commutation, il court-circuite la source de tension (3) en amont du composant électronique (2) de telle manière qu'aucun courant ne passe par le composant électronique (2) situé en aval et qu'ainsi une connexion entre la source de tension (3) et le composant électronique (2) soit interrompue.

2. Agencement de circuit (1) selon la revendication 1, **caractérisé en ce que** le composant électronique (2) comporte au moins un élément de résistance électrique dépendant de la température.

3. Agencement de circuit (1) selon la revendication 1 ou 2, **caractérisé en ce que** le commutateur (10) est un thyristor.

4. Agencement de circuit (1) selon l'une des revendications 1 à 3, **caractérisé en ce que** le composant électronique (2) fait partie d'au moins un pont de Wheatstone redondant (13) et **en ce qu'**il est prévu au moins un dispositif de commutation redondant (14) qui, à partir d'une tension transversale de pont du pont de Wheatstone redondant (13), agit sur l'application du courant électronique au composant électronique (2).
